# EUROPEAN PATENT SPECIFICATION

(11) **EP 3 594 622 B1**
(45) Date of publication and mention of the grant of the patent: **18.01.2023**
(21) Application number: 19177318.3
(22) Date of filing: 29.05.2019
(51) Int. Cl.: G01C 21/30, G05D 1/02, G06K 9/00, G06T 7/73

(54) **POSITION UPDATE METHOD AND APPARATUS, POSITION DISPLAY METHOD, NAVIGATION ROUTE DISPLAY METHOD AND VEHICLE**
POSITIONSAKTUALISIERUNGSVERFAHREN UND -VORRICHTUNG, POSITIONSANZEIGEVERFAHREN, NAVIGATIONSROUTENANZEIGEVERFAHREN UND FAHRZEUG
PROCÉDÉ ET APPAREIL DE MISE À JOUR DE LA POSITION, PROCÉDÉ D'AFFICHAGE DE POSITION, PROCÉDÉ D'AFFICHAGE D'ITINÉRAIRES DE NAVIGATION ET VÉHICULE

(30) Priority: 07.12.2018 CN 201811497106
(43) Date of publication of application: 15.01.2020
(73) Proprietor: Ninebot (Beijing) Tech Co., Ltd., Beijing 100192 (CN)
(72) Inventor: YUAN, Yubin, Beijing 100192 (CN); LIU, Haiyang, Beijing 100192 (CN); XI, Weining, Beijing 100192 (CN); CHEN, Zichong, Beijing 100192 (CN); CHEN, Zhongyuan, Beijing 100192 (CN)
(74) Representative: Carangelo, Pierluigi

(56) References cited:
- EP-A1- 3 290 864
- GEORG SCHROTH ET AL: "Mobile Visual Location Recognition", IEEE SIGNAL PROCESSING MAGAZINE, IEEE SERVICE CENTER, PISCATAWAY, NJ, US, vol. 28, no. 4, 1 July 2011 (2011-07-01), pages 77-89, XP011367636, ISSN: 1053-5888, DOI: 10.1109/MSP.2011.940882
- Hang Chu ET AL: "Accurate Vision-based Vehicle Localization using Satellite Imagery", , 30 October 2015 (2015-10-30), XP055633403, Retrieved from the Internet: URL:https://arxiv.org/pdf/1510.09171.pdf [retrieved on 2019-10-17]

## Description

### Technical Field

The present application relates to the field of navigation, and in particular, to a position update method and a apparatus, a position display method, a navigation route display method and a vehicle are provided.

### Background

With the advances of science and technology, cities have been increasingly developed, and subway and bus constitute a large artery of city traffic, and in recent years, the appearance of car hailing, shared bicycles, shared motorcycles and shared electric scooters make people's travel much convenient.

During the actual travel of the application car hailing, the shared bicycle, or the shared electric scooter, the passenger or the worker needs to find the target vehicle by positioning and navigation, and the principle thereof is that the positioning system installed on these vehicles sends the vehicle position to the background server through the communication system. When the passenger or worker sends a request for acquiring the position information of the surrounding vehicle to the background server through the smart phone APP, the background service system sends the position information of the surrounding vehicle to the APP. After the passenger or worker selects the target vehicle, and arrive at the position of the target vehicle with the aid of the APP navigation system.

However, since the existing positioning navigation system has a problem of inaccurate positioning of the position of the target vehicle, it is very easy for the passenger or the worker to walk the wrong way. Alternatively, the topography of the position of the target vehicle may be complicated, and the navigation may only provide an approximate range of the vehicle position; Moreover, sometimes the passenger or worker is not familiar with the road in the vicinity of the target vehicle, and the vehicle needs to be found for a long time even if the passenger or worker has reached the vicinity of the target vehicle. This obviously greatly reduces the vehicle finding efficiency of the passenger or staff, and also reduces the travel efficiency, so that the passenger's travel experience is poor.

Patent document US 3290864 A1 relates to a driver assistance system for determining a position of a vehicle. The driver assistance system comprises a positioning system for providing visual information about the position of the vehicle based on a comparison between image data of an image generated by an on-board camera and image data of an image stored in a database.

The above information disclosed in the background section is merely configured to enhance the understanding of the background of the technology described herein, and therefore, it is possible to contain certain information that is not formed in the state of the art to a person skilled in the art.

### Summary

The main object of the present application is to provide a position update method, a position display method, a navigation route display method, a position update apparatus and a vehicle, so as to solve the problem of inaccurate position of an acquired target vehicle in the prior art. The problem is solved by the features of the independent claims. Variations are as described by the dependent claims.

By applying the technical solution of the present application, in the above position update method, firstly, a first position detected by a GPS component and a real image taken by a photographing device are acquired, and then the first position is updated and corrected according to the real image to obtain a relatively accurate second position. The position of the target vehicle obtained by the position update method is more accurate, and the problem of low vehicle searching efficiency or difficulty searching caused by inaccurate position of the target vehicle in the prior art can be avoided.

### Brief Description of the Drawings

The accompanying drawings, which form a part of the present application, provide a further understanding of the present application, and the schematic embodiments of the present application and the description thereof are used for explaining the present application, and do not constitute an improper limitation to the present application. In the drawings:
Fig. 1 shows a flowchart of an embodiment of a position update method according to the present application;
Fig. 2 shows a flowchart of an embodiment of a position display method according to the present application;
Fig. 3 shows a flowchart of an embodiment of a navigation route display method according to the present application;
Fig. 4 shows a structural block diagram of an embodiment of a position update apparatus according to the present application;
Fig. 5 shows a structural diagram of an embodiment of a vehicle according to the present application; and
Fig. 6 shows an enlarged schematic diagram of the partial structure of Fig. 5.

### Detailed Description of the Embodiments

It should be noted that the embodiments and the features in the embodiments of the present application can be combined with each other without conflict. Hereinafter, the present application will be described in detail with reference to the accompanying drawings and embodiments.

In order to make those skilled in the art better understand the solutions of the present application, the technical solutions in the embodiments of the present application will be clearly and completely described below with reference to the accompanying drawings in the embodiments of the present application.

It should be noted that the terms "first" and "second" and the like in the description and claims of the present application and the figures described above are configured to distinguish similar objects, and do not need to be configured to describe a specific order or precedence order. It is to be understood that the data so used may be interchanged, where appropriate, for the embodiments of the present application described herein. Moreover, the terms "comprising" and "having" and any variation thereof, are intended to cover not exclusively comprising, for example, processes, methods, systems, products or apparatuses comprising a series of steps or units are not necessarily limited to those steps or units that are clearly listed. Instead, other steps or units not expressly listed or inherent to these processes, methods, products or devices may be comprised.

As described above, in the prior art, the position of the target vehicle is inaccurate, which may result in that the worker or the user needs to take a long time to find the vehicle or fail to find the vehicle during the subsequent vehicle finding process, and in order to solve the problem caused by the inaccuracy of the position of the target vehicle, according to the embodiment of the present application, a position update method is provided.

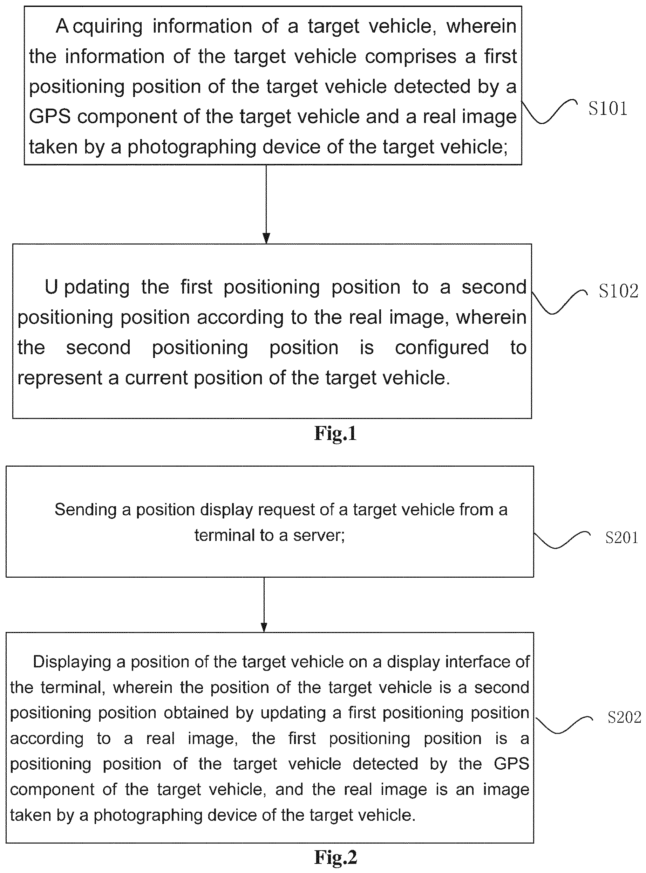

Fig. 1 is a flowchart of a position update method according to an embodiment of the present application. As shown in Fig. 1, the method comprises the following steps:
Step S101, acquiring information of a target vehicle, wherein the information of the target vehicle comprises a first position of the target vehicle detected by a GPS component of the target vehicle and a real image taken by a photographing device of the target vehicle;
Step S102: updating the first position to a second position according to the real image, wherein the second position is configured to represent a current position of the target vehicle.

In the above position update method, firstly, the first position detected by the GPS component and the real image taken by the photographing device are acquired, and then the first position is updated and corrected according to the real image to acquire a relatively accurate second position. The position of the target vehicle obtained by the position update method is more accurate, and the problem of low vehicle searching efficiency or difficulty searching caused by inaccurate position of the target vehicle in the prior art can be avoided.

It should be noted that the steps shown in the flowcharts may be performed in a computer system such as a set of computer-executable instructions, and, although a logical order is shown in the flowcharts, in some cases, the steps shown or described may be performed in an order different from that here.

In a practical application process, even if a user or a worker knows a specific position of the target vehicle, it is difficult to quickly find the target vehicle by means of his/her own force due to poor sense of direction or unfamiliar with the local area, and in order to solve this problem, before acquiring the information of the target vehicle, the method further comprises: acquiring a navigation route generation request, wherein the navigation route generation request is configured to request for acquiring a navigation route from the current position to the target vehicle, and the current position is an issuing position of the navigation route generation request, after updating the first position to the second position according to the real image, the method further comprises: generating the navigation route according to the second position and the current position. In this way, the user or the worker can find the target vehicle more easily according to the navigation route.

The above-mentioned process of updating the first position to the second position according to the real image has a plurality of implementations, and a person skilled in the art would have been able to choose an appropriate method to implement the process according to actual situations, and in a specific embodiment of the present application, updating the first position to the second position according to the real image comprises: comparing the real image with an image in a predetermined street-view database to obtain a comparison result, wherein the predetermined street-view database records an image and a position where the image is captured, both of which have a mapping relationship with each other; updating the first position to the second position according to the comparison result.

Specifically, the real image may be compared with a plurality of images in the predetermined street-view database, and if it is found that a similarity between the real image and a pattern in the predetermined street-view database is greater than a first predetermined threshold, it is determined that the position of the real image is the position of the image in the predetermined street-view database. That is, the first position is updated to a target position having a mapping relationship with the target image in the predetermined street-view database, wherein the second position is the target position. The first predetermined threshold may be selected according to actual requirements, for example, may be set to 95%, 98% or 99%, etc.

In a practical application process, there may be a case that "the similarity between the real image and a plurality of images in the predetermined street-view database is greater than the first predetermined threshold and the similarity is different", and for this case, a target position corresponding to an image with the largest similarity of the real image is selected as a second position; It is also possible that "the similarity between the real image and the plurality of images in the predetermined street-view database is greater than the first predetermined threshold, and the similarity is the same, and the target positions of the corresponding plurality of images are different", for this case, the target vehicle can be controlled to acquire the real image at another angle. The real image is compared with the image in the predetermined street-view database until the second position can be determined, or the target vehicle can be controlled to move, and after moving, the corresponding real image and the first position are acquired, and then the real image is compared with the image in the predetermined street-view database until the second position is determined.

In a practical comparison process, it may occur that the similarity between the real image and the image in the predetermined street-view database does not reach the first predetermined threshold, and in this case, the process of comparing the real image with the image in the predetermined street-view database may further comprise: looking up a set of images in the predetermined street-view database of which a position is less than a second predetermined threshold from the first position; comparing the real image with each image in the set of images respectively.

The above-mentioned predetermined street-view database may be an existing street-view database in the prior art, for example, a street-view database of a Baidu map and a street-view database of a Auto Navi map, and may also be a street-view database obtained by photographing of a vehicle within a predetermined time period. In this embodiment, before acquiring information of a target vehicle, the method further comprises: acquiring a plurality of real images captured by a plurality of vehicles within a predetermined time period, and a position of the plurality of vehicles where the plurality of real images are captured, so that data of a predetermined street-view database is more comprehensive, wherein each of the plurality of the real images maps a position of one of the plurality of the vehicles; establishing the predetermined street-view database with the plurality of real images and positions of the plurality of vehicles, both of which have a mapping relationship with each other. In an actual process of establishing the predetermined street-view database, when a plurality of real images and corresponding positions are all the same, choose one real image and corresponding position to establish the predetermined street-view database.

In a specific embodiment of the present application, he acquiring the information of the target vehicle comprises: sending a reporting instruction to the target vehicle; acquiring the real image taken and reported by the target vehicle in response to the reporting instruction, and acquiring the first position reported by the target vehicle. In this way, when the vehicle is required, the first position obtained by sending a reporting instruction to the target vehicle is more accurate.

In a practical application process, it is not limited to acquiring the real image and the first position after sending the reporting instruction, and may also be that the target vehicle sends the first position and the real image thereof at a predetermined frequency.

Specifically, the position update method may be a method executed by the server.

According to another embodiment of the present application, a position display method is provided.

Fig. 2 is a flowchart of a position display method according to an embodiment of the present application. As shown in Fig. 2, the method comprises the following steps:
Step S201, sending a position display request of a target vehicle from a terminal to a server;
Step S202: displaying a position of the target vehicle on a display interface of the terminal, wherein the position of the target vehicle is a second position obtained by updating a first position according to a real image, the first position is a position of the target vehicle detected by the GPS component of the target vehicle, and the real image is an image taken by a photographing device of the target vehicle.

.In the above position display method, the position of the target vehicle displayed on the display interface of the terminal is a second position obtained by updating the first position according to the real image, and the position is more accurate with respect to the first position because the update correction is performed according to the real image. The problem of low vehicle searching efficiency or difficulty in searching for a vehicle due to inaccuracy of the position of the target vehicle in the prior art can be avoided.

It should be noted that the steps shown in the flowcharts may be performed in a computer system such as a set of computer-executable instructions, and, although a logical order is shown in the flowcharts, in some cases, the steps shown or described may be performed in an order different from that here.

In a practical application process, even if the user or the worker knows the specific position of the target vehicle, it is difficult to find the target vehicle quickly by his/her own efforts due to poor sense of direction or unfamiliar with the local area, and in order to solve this problem, an embodiment of the present application is provided. After displaying the position of the target vehicle on the display interface of the terminal, the method further comprises: sending a navigation route generation request from the terminal to the server, wherein the navigate route generation request is configured to request for acquiring a navigation route from a current position of the terminal to the target vehicle; acquiring the navigation route from the server, wherein the navigation route is generated according to the current position and the second position; displaying the navigation route on the display interface of the terminal.

In order to make the user or the worker find the target vehicle more quickly, an embodiment of the present application, displaying the navigation route on the display interface of the terminal comprises: displaying virtual route information in a real-time scene image obtained by a camera of the terminal, wherein the virtual route information is configured to indicate the navigation route. As thus, the user or the worker can clearly acquire his/her own direction to walk through the virtual route information, so that can find the corresponding target vehicle more quickly. The display of the virtual route information may be based on the Augment Reality (AR) technology in the prior art.

According to another embodiment of the present application, a navigation route display method is provided.

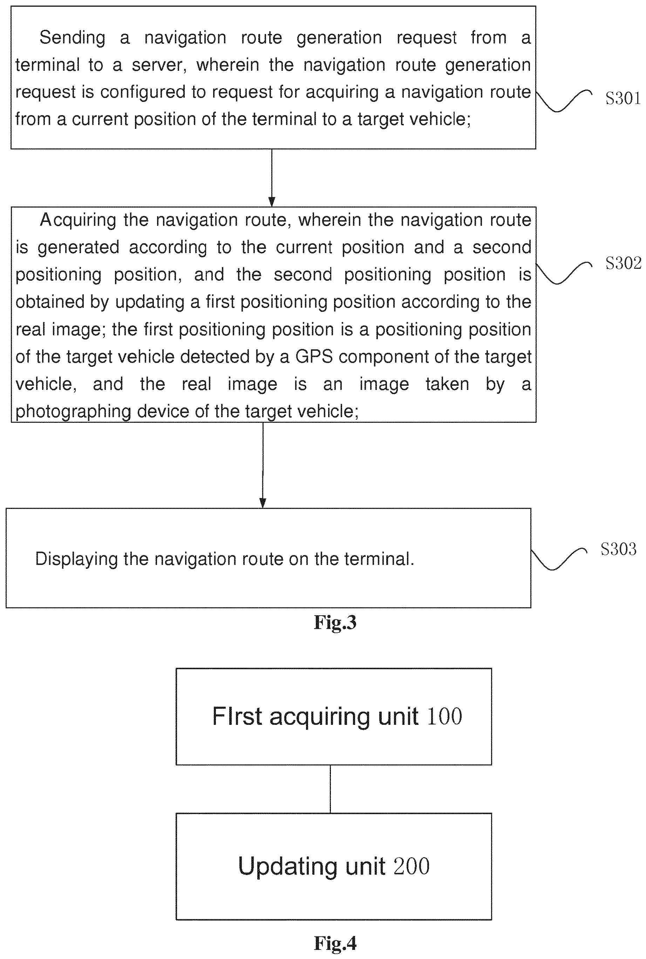

Fig. 3 is a flowchart of a navigation route display method according to an embodiment of the present application. As shown in Fig. 3, the method comprises the following steps:
Step S301, sending a navigation route generation request from a terminal to a server, wherein the navigation route generation request is configured to request for acquiring a navigation route from a current position of the terminal to a target vehicle;
Step S302: acquiring the navigation route, wherein the navigation route is generated according to the current position and a second position, and the second position is obtained by updating a first position according to the real image; the first position is a position of the target vehicle detected by a GPS component of the target vehicle, and the real image is an image taken by a photographing device of the target vehicle;
Step S303: displaying the navigation route on the terminal.

In the above navigation route display method, the navigation route displayed by the terminal is generated according to the current position and the second position, and the second position is obtained by updating the first position according to the real image, and the second position is more accurate than the first position. Thus, the obtained navigation route is also more accurate, and the problem in the prior art that the navigation route is inaccurate due to the inaccuracy of the position of the target vehicle can be avoided.

It should be noted that the steps shown in the flowcharts may be performed in a computer system such as a set of computer-executable instructions, and, although a logical order is shown in the flowcharts, in some cases, the steps shown or described may be performed in an order different from that here.

In order to enable the user or the worker to find a target vehicle more quickly, in an embodiment of the present application, displaying the navigation route on the terminal comprises: displaying virtual route information in a real-time scene image obtained by a camera on the terminal, wherein the virtual route information is configured to indicate the navigation route.

The embodiment of the present application further provides a position update apparatus, and it should be noted that the position update apparatus in the embodiment of the present application may be configured to execute the position update method provided in the embodiment of the present application. Hereinafter, the position update apparatus provided by the embodiment of the present application is introduced.

Fig. 4 is a schematic diagram of a position update apparatus according to an embodiment of the present application. As shown in Fig. 4, the apparatus comprises:
a first acquiring unit 100, configured to acquire information of a target vehicle, wherein the information of the target vehicle comprises a first position of the target vehicle detected by a GPS component of the target vehicle and a real image taken by a photographing device of the target vehicle;
an updating unit 200, configured to update the first position to a second position according to the real image, wherein the second position is configured to represent a current position of the target vehicle.

In the above position update apparatus, the first acquiring unit acquires the first position detected by the GPS component and the real image taken by the photographing device, and then the updating unit updates and corrects the first position according to the real image to acquire a relatively accurate second position. The position of the target vehicle obtained by the position update apparatus is more accurate, and the problem of low vehicle searching efficiency or difficulty searching caused by inaccurate position of the target vehicle in the prior art can be avoided.

In a practical application process, even if the user or the worker knows the specific position of the target vehicle, it is difficult to quickly find the target vehicle by means of his/her own force due to poor sense of direction or unfamiliar with the local area, and in order to solve this problem, an embodiment of the present application is provided. The update apparatus further comprises a second acquiring unit, the second acquiring unit is configured to acquire a navigation route generation request, wherein the navigation route generation request is configured to request for acquiring a navigation route from a current position to the target vehicle, and the current position is an issuing position of the navigation route generation request. The update apparatus further comprises a generating unit, the generating unit is configured to generate the navigation route according to the second position and the current position after updating the first position to the second position according to the real image. As thus, the user or the worker can find the target vehicle more easily according to the navigation route.

The above-mentioned process of updating the first position to the second position according to the real image has a plurality of implementations, and a person skilled in the art would have been able to choose an appropriate method to implement the process according to actual situations, and in a specific embodiment of the present application, the updating unit comprises a comparison module and an updating module, the comparison module is configured to compare the real image with an image in a predetermined street-view database to obtain a comparison result, wherein the predetermined street-view database records an image and a position where the image is captured, both of which have a mapping relationship with each other; an updating module is configured to update the first position to the second position according to the comparison result.

Specifically, the real image may be compared with a plurality of images in the predetermined street-view database, and when it is found that a similarity between the real image and a certain image in the predetermined street-view database is greater than a first predetermined threshold, the position of the real image is determined as the position of the image in the predetermined street-view database. That is, the first position is updated to a target position in the predetermined street database, and the target position has a mapping relationship with the target image, wherein the second position is the target position. The first predetermined threshold may be selected according to actual requirements, for example, may be set to 95%, 98% or 99%, etc.

In a practical comparison process, it may occur that the similarity between the real image and the image in the predetermined street-view database does not reach the first predetermined threshold, then in this case, the comparison module comprises a searching sub-module and a comparison sub-module, wherein the searching sub-module searches in the predetermined street-view database for a set of images with a position that is less than the second predetermined threshold from the first position; The comparison sub-module compares the real image with the images in the set of images respectively.

The above-mentioned predetermined street-view database may be an existing street-view database in the prior art, for example, a street-view database of the Baidu map and a street-view database of the Auto Navi map, or a street-view database obtained by photographing of a vehicle within a predetermined time period, and in this embodiment, the updating unit further comprises a predetermined street-view database. The predetermined street-view database stores the plurality of real images and positions having a mapping relationship with real images of the plurality of vehicles, the plurality of real images and positions having a mapping relationship with real images of the plurality of vehicles, and the plurality of real images are obtained by photographing of a plurality of vehicles within a predetermined time period. The positions of the plurality of vehicles are positions of the plurality of vehicles when the plurality of real images is captured.

In a specific embodiment of the present application, the first acquiring unit comprises a sending module and a first acquiring module, where the sending module is configured to send a reporting instruction to the target vehicle; The first acquiring module is configured to acquire the real image captured and reported by the target vehicle in response to the reporting instruction and the first position reported by the target vehicle.

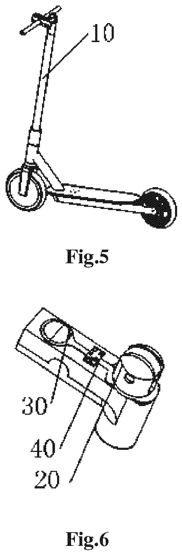

Fig. 5 is a schematic structural diagram of a vehicle according to an embodiment of the present application, and Fig. 6 is a partial enlarged diagram of Fig. 5, as shown in Figs. 5 and 6, the vehicle comprises:
A body 10;
A photographing device 20, mounted on the body, the photographing device being configured to take a real image around the vehicle;
A GPS component 30, mounted on the body, the GPS component being configured to acquire a first position of the vehicle;
A transmission unit 40, mounted on the body, the transmission unit being configured to receive and transmit information, wherein the information comprises the first position and the real image.

The vehicle further comprises a processor (not shown) mounted on the body, and the processor is configured to control operation of the GPS component, the photographing device, and the transmission unit.

The vehicle comprises a GPS component 30 and a photographing device 20. The GPS component 30 may acquire a first position of the vehicle, the photographing device 20 photograph a real image obtained, and the transmission unit 40 sends the first position and the real image to a server. Subsequently, the server updates and corrects the first position according to the real image to acquire a relatively accurate second position.

It should be noted that the GPS component 30, the photographing device 20 and the transmission unit 40 in the present application may be arranged at any feasible position of the body, and a person skilled in the art would have been able to arrange them at different positions of the body according to actual situations, in a specific embodiment. The GPS component, the photographing device and the transmission unit are provided on the handlebar.

An embodiment of the present application further provides a system, the system comprises a vehicle and first software, wherein the first software serves as a client, and the first software is configured to execute the position display method.

By implementing the above-described method, the accurate position of the target vehicle can be acquired, and the problem in the prior art that the vehicle searching efficiency is low or the vehicle is difficult to search is avoided.

In order to enable the user or the worker to find a target vehicle more quickly and efficiently, in an embodiment of the present application, the system further comprises a second software, the second software serves as a server, and the second software is configured to execute the position update method.

The present application can be applied to any applicable scenario, a specific application scenario is an electric scooter, and Fig. 5 also shows an electric scooter. Of course, in addition to the electric scooter, the application scenario of the present application can also be a shared bicycle, a shared motorcycle, etc. A person skilled in the art would have been able to apply the solution of the present application in various scenarios according to actual situations.

The position update apparatus comprises a processor and a memory, and the first acquiring unit and the updating unit are both stored in the memory as program units, and the processor executes the program units stored in the memory to realize corresponding functions.

The processor comprises a kernel, and the kernel acquires a corresponding program unit from a memory. The kernel may be set one or more to accurately obtain the position of the target vehicle by adjusting the kernel parameter.

The memory may comprise non-persistent memory in a computer readable medium, random access memory (RAM) and/or non-volatile memory, such as read only memory (ROM) or flash RAM, the memory comprising at least one memory chip.

An embodiment of the present invention provides a storage medium, on which a program is stored, and the position update method is implemented when the program is executed by a processor.

An embodiment of the present invention provides a processor, where the processor is configured to run a program, and the position update method is executed when the program runs.

An embodiment of the present invention provides an apparatus, where the apparatus comprises a processor, a memory, and a program stored in the memory and executable on the processor, and the processor implements at least the following steps when executing the program:
Step S101, acquiring information of a target vehicle, wherein the information of the target vehicle comprises a first position of the target vehicle detected by a GPS component of the target vehicle and a real image taken by a photographing device of the target vehicle;
Step S102: updating the first position to a second position according to the real image, wherein the second position is configured to represent a current position of the target vehicle.

The devices herein may be servers, PCs, PADs, mobile phones, etc.

The present application further provides a computer program product, which, when executed on a data processing device, is adapted to execute a program initialized with at least the following method steps:
Step S101, acquiring information of a target vehicle, wherein the information of the target vehicle comprises a first position of the target vehicle detected by a GPS component of the target vehicle and a real image taken by a photographing device of the target vehicle;
Step S102: updating the first position to a second position according to the real image, wherein the second position is configured to represent a current position of the target vehicle.

Those skilled in the art will appreciate that embodiments of the present application may be provided as a method, system, or computer program product. Therefore, the present application may take the form of an entirely hardware embodiment, an entirely software embodiment, or an embodiment combining software and hardware aspects. Moreover, the present application may take the form of a computer program product embodied on one or more computer usable storage media (comprising but not limited to disk memory, CD-ROM, optical memory, etc.) having computer usable program code embodied therein.

The present application is described with reference to flowcharts and/or block diagrams of methods, apparatuses (systems), and computer program products according to embodiments of the present application. It should be understood that each of the flowcharts and/or blocks in the flowcharts and/or block diagrams, as well as combinations of flowcharts and/or blocks in the flowcharts and/or block diagrams, may be implemented by computer program instructions. These computer program instructions may be provided to a processor of a general purpose computer, a special purpose computer, an embedded processor or other programmable data processing apparatus to produce a machine, causing instructions executed by a processor of a computer or other programmable data processing apparatus to generate means for implementing the functions specified in one or more flowcharts and one or more blocks of the flowcharts.

These computer program instructions may also be stored in a computer readable memory capable of directing a computer or other programmable data processing apparatus to function in a particular manner, such that the instructions stored in the computer readable memory produce an article of manufacture comprising instruction means, The instruction means implements the functions specified in one or more flowcharts and one or more blocks of the block diagram.

These computer program instructions may also be loaded onto a computer or other programmable data processing apparatus such that a series of operational steps are performed on the computer or other programmable apparatus to produce computer-implemented processing. Thus, the instructions executed on the computer or other programmable device provide steps for implementing the functions specified in one or more flowcharts and one or more blocks of the flowcharts.

In a typical configuration, the computing device comprises one or more processors (CPUs), input/output interfaces, network interfaces, and memory.

The memory may comprise non-permanent memory in a computer readable medium, random access memory (RAM) and/or non-volatile memory or any combination thereof, such as read only memory (ROM) or flashes RAM. Memory is an example of a computer readable medium.

Computer readable media, comprising permanent and non-permanent, removable and non-removable media, may be implemented by any method or technology for information storage. The information may be computer readable instructions, data structures, modules of programs, or other data. Examples of storage media of a computer comprise: but not limited to phase change memory (PRAM), static random access memory (SRAM), dynamic random access memory (DRAM), other types of random access memory (RAM), read-only memory (ROM), electrically erasable programmable read-only memory (EEPROM), flash memory body or other memory technology, read-only optical disk read-only memory (CD-ROM), digital versatile disc (DVD) or other optical storage, magnetic cassette tape, A magnetic tape disk storage or other magnetic storage device or any other non-transmission medium may be configured to store information that may be accessed by the computing device. As defined herein, computer readable media does not comprise transitory computer readable media such as modulated data signals and carriers.

It should also be noted that the terms "comprising," "comprising," or any other variation thereof are intended to encompass non-exclusive inclusion such that processes, methods, goods, or devices comprising a series of elements comprise not only those elements, but also other elements not explicitly listed, or other elements inherent to such processes, methods, goods, or devices. Without more limitation, the elements defined by the statement "comprising one..." do not preclude the presence of additional identical elements in the process, method, merchandise or device comprising the elements.

Those skilled in the art will appreciate that embodiments of the present application may be provided as a method, system, or computer program product. Therefore, the present application may take the form of an entirely hardware embodiment, an entirely software embodiment, or an embodiment combining software and hardware aspects. Moreover, the present application may take the form of a computer program product embodied on one or more computer usable storage media (comprising but not limited to disk memory, CD-ROM, optical memory, etc.) having computer usable program code embodied therein.

From the above description, it can be seen that the embodiments of the present application achieve the following technical effects:
1) In the position update method of the present application, firstly, the first position detected by the GPS component and the real image taken by the photographing device are acquired, and then the first position is updated and corrected according to the real image to acquire a relatively accurate second position. The position of the target vehicle obtained by the position update method is more accurate, and the problem of low vehicle searching efficiency or difficulty searching caused by inaccurate position of the target vehicle in the prior art can be avoided.
2) In the position display method of the present application, the position of the target vehicle displayed on the display interface of the terminal is a second position obtained by updating the first position according to the real image, and the position is more accurate with respect to the first position because the update correction is performed according to the real image. The problem of low vehicle searching efficiency or difficulty in searching for a vehicle due to inaccuracy of the position of the target vehicle in the prior art can be avoided.
3) In the navigation route display method of the present application, the navigation route displayed by the terminal is generated according to the current position and the second position, and the second position is obtained by updating the first position according to the real image, and the second position is more accurate than the first position. Thus, the obtained navigation route is also more accurate, and the problem in the prior art that the navigation route is inaccurate due to the inaccuracy of the position of the target vehicle can be avoided.
4) In the position update apparatus of the present application, the first acquiring unit acquires the first position detected by the GPS component and the real image taken by the photographing device, and then the updating unit updates and corrects the first position according to the real image to acquire a relatively accurate second position. The position of the target vehicle obtained by the position update apparatus is more accurate, and the problem of low vehicle searching efficiency or difficulty searching caused by inaccurate position of the target vehicle in the prior art can be avoided.
5) The vehicle of the present application comprises a GPS component 30 and a photographing device 20; the GPS component 30 may acquire a first position of the vehicle, the photographing device 20 photograph a real image obtained, and the transmission unit 40 sends the first position and the real image to a server. Subsequently, the server updates and corrects the first position according to the real image to acquire a relatively accurate second position.
6) The system of the present application can acquire the accurate position of the target vehicle by executing the method, which can avoid the problem in the prior art that the vehicle searching efficiency is low or the vehicle is difficult to search because the position of the target vehicle is inaccurate.

## Claims

1. A position update method, comprising:
acquiring information of a target vehicle, wherein the information of the target vehicle comprises a first position of the target vehicle detected by a GPS component of the target vehicle and a real image taken by a photographing device of the target vehicle and the real image being an image which is taken around the vehicle;
updating the first position to a second position according to the real image, wherein the second position is configured to represent a current position of the target vehicle,
wherein updating the first position to the second position according to the real image comprises:
comparing the real image with an image in a predetermined street-view database to obtain a comparison result, wherein the predetermined street-view database records an image and a position where the image is captured, both of which have a mapping relationship with each other;
updating the first position to the second position according to the comparison result,
wherein updating the first position to the second position according to the comparison result comprises:
updating the first position to a target position in the predetermined street-view database having a mapping relationship between the target position and a target image, wherein the second position is the target position, in a case where a similarity between the real image and the target image in the predetermined street-view database is greater than a first predetermined threshold, wherein the target image is an image in the predetermined street-view database and whose similarity with the real image is greater than the first predetermined threshold,
in a case that the similarity between the real image and the plurality of images in the predetermined street-view database is greater than the first predetermined threshold, and the similarity is the same, and the target positions of the corresponding plurality of images are different, wherein updating the first position to the second position according to the comparison result further comprises:
the target vehicle acquiring the real image at another angle; comparing the real image with the image in the predetermined street-view database until the second position can be determined,
or ,
wherein updating the first position to the second position according to the comparison result further comprises:
controlling the target vehicle to move, and after moving, acquiring the corresponding real image and the first position, and then comparing the real image with the image in the predetermined street-view database until the second position is determined.

2. The method according to claim 1, wherein
before acquiring the information of the target vehicle, the method further comprises: acquiring a navigation route generation request, wherein the navigation route generation request is configured to request for acquiring a navigation route from the current position to the target vehicle, and the current position is an issuing position of the navigation route generation request,
after updating the first position to the second position according to the real image, the method further comprises: generating the navigation route according to the second position and the current position.

3. The method according to claim 1, wherein comparing the real image with the image in the predetermined street database comprises:
looking up a set of images in the predetermined street-view database of which a position is less than a second predetermined threshold from the first position;
comparing the real image with each image in the set of images respectively.

4. The method according to claim 1, wherein before acquiring the information of the target vehicle, the method further comprises:
acquiring a plurality of real images captured by a plurality of vehicles within a predetermined time period, and a position of the plurality of vehicles where the plurality of real images are captured, wherein each of the plurality of the real images maps a position of one of the plurality of the vehicles;
establishing the predetermined street-view database with the plurality of real images and positions of the plurality of vehicles, both of which have a mapping relationship with each other.

5. The method according to any one of claims 1 to 4, wherein the acquiring the information of the target vehicle comprises:
sending a reporting instruction to the target vehicle;
acquiring the real image taken and reported by the target vehicle in response to the reporting instruction, and acquiring the first position reported by the target vehicle.

6. A position display method, comprising:
sending a position display request of a target vehicle from a terminal to a server;
displaying a position of the target vehicle on a display interface of the terminal, wherein the position of the target vehicle is a second position obtained by updating a first position according to a real image, the first position is a position of the target vehicle detected by the GPS component of the target vehicle, and the real image is an image taken by a photographing device of the target vehicle,
wherein updating the first position to the second position according to the real image comprises:
comparing the real image with an image in a predetermined street-view database to obtain a comparison result, wherein the predetermined street-view database records an image and a position where the image is captured, both of which have a mapping relationship with each other;
updating the first position to the second position according to the comparison result,
wherein updating the first position to the second position according to the comparison result comprises:
updating the first position to a target position in the predetermined street-view database having a mapping relationship between the target position and a target image, wherein the second position is the target position, in a case where a similarity between the real image and the target image in the predetermined street-view database is greater than a first predetermined threshold, wherein the target image is an image in the predetermined street-view database and whose similarity with the real image is greater than the first predetermined threshold,
in a case that the similarity between the real image and the plurality of images in the predetermined street-view database is greater than the first predetermined threshold, and the similarity is the same, and the target positions of the corresponding plurality of images are different, wherein updating the first position to the second position according to the comparison result further comprises:
the target vehicle acquiring the real image at another angle; comparing the real image with the image in the predetermined street-view database until the second position can be determined,
or ,
wherein updating the first position to the second position according to the comparison result further comprises:
controlling the target vehicle to move, and after moving, acquiring the corresponding real image and the first position, and then comparing the real image with the image in the predetermined street-view database until the second position is determined.

7. The method according to claim 6, wherein after displaying the position of the target vehicle on the display interface of the terminal, the method further comprises:
sending a navigation route generation request from the terminal to the server, wherein the navigate route generation request is configured to request for acquiring a navigation route from a current position of the terminal to the target vehicle;
acquiring the navigation route from the server, wherein the navigation route is generated according to the current position and the second position;
displaying the navigation route on the display interface of the terminal.

8. The method according to claim 7, wherein the displaying the navigation route on the display interface of the terminal comprises:
displaying virtual route information in a real-time scene image obtained by a camera of the terminal, wherein the virtual route information is configured to indicate the navigation route.

9. A vehicle, comprising:
a body;
a photographing device, mounted on the body, the photographing device being configured to take a real image around the vehicle;
a GPS component, mounted on the body, the GPS component being configured to acquire a first position of the vehicle;
a transmission unit, mounted on the body, the transmission unit being configured to receive and transmit information, wherein the information comprises the first position and the real image;
a processor, mounted on the body, the processor being configured to control operation of the GPS component, the photographing device and the transmission unit,
wherein the position is a first position, and the real image is configured to update the first position to a second position,
wherein updating the first position to the second position according to the real image comprises:
comparing the real image with an image in a predetermined street-view database to obtain a comparison result, wherein the predetermined street-view database records an image and a position where the image is captured, both of which have a mapping relationship with each other;
updating the first position to the second position according to the comparison result,
wherein updating the first position to the second position according to the comparison result comprises:
updating the first position to a target position in the predetermined street-view database having a mapping relationship between the target position and a target image, wherein the second position is the target position, in a case where a similarity between the real image and the target image in the predetermined street-view database is greater than a first predetermined threshold, wherein the target image is an image in the predetermined street-view database and whose similarity with the real image is greater than the first predetermined threshold,
in a case that the similarity between the real image and the plurality of images in the predetermined street-view database is greater than the first predetermined threshold, and the similarity is the same, and the target positions of the corresponding plurality of images are different, wherein updating the first position to the second position according to the comparison result further comprises:
the target vehicle acquiring the real image at another angle; comparing the real image with the image in the predetermined street-view database until the second position can be determined,
or ,
wherein updating the first position to the second position according to the comparison result further comprises:
controlling the target vehicle to move, and after moving, acquiring the corresponding real image and the first position, and then comparing the real image with the image in the predetermined street-view database until the second position is determined.

## Patentansprüche

1. Positionsaktualisierungsverfahren, umfassend:
Erfassen von Informationen eines Zielfahrzeugs, wobei die Informationen des Zielfahrzeugs eine erste Position des Zielfahrzeugs umfassen, die von einer GPS-Komponente des Zielfahrzeugs detektiert wird, und ein reales Bild, das von einer Fotografiervorrichtung des Zielfahrzeugs aufgenommen wird, und wobei das reale Bild ein Bild ist, das um das Fahrzeug herum aufgenommen wird;
Aktualisieren der ersten Position auf eine zweite Position gemäß dem realen Bild, wobei die zweite Position konfiguriert ist, um eine aktuelle Position des Zielfahrzeugs darzustellen,
wobei das Aktualisieren der ersten Position auf die zweite Position gemäß dem realen Bild umfasst:
Vergleichen des realen Bilds mit einem Bild in einer vorbestimmten Street-View-Datenbank, um ein Vergleichsergebnis zu erhalten, wobei die vorbestimmte Street-View-Datenbank ein Bild und eine Position aufzeichnet, an der das Bild aufgenommen wird, die beide eine Abbildungsbeziehung zueinander aufweisen;
Aktualisieren der ersten Position auf die zweite Position gemäß dem Vergleichsergebnis,
wobei das Aktualisieren der ersten Position auf die zweite Position gemäß dem Vergleichsergebnis umfasst:
Aktualisieren der ersten Position auf eine Zielposition in der vorbestimmten Street-View-Datenbank, die eine Abbildungsbeziehung zwischen der Zielposition und einem Zielbild aufweist, wobei die zweite Position die Zielposition ist, in einem Fall, in dem eine Ähnlichkeit zwischen dem realen Bild und dem Zielbild in der vorbestimmten Street-View-Datenbank größer als ein erster vorbestimmter Schwellenwert ist, wobei das Zielbild ein Bild in der vorbestimmten Street-View-Datenbank ist, und dessen Ähnlichkeit mit dem realen Bild größer als der erste vorbestimmte Schwellenwert ist,
in einem Fall, in dem die Ähnlichkeit zwischen dem realen Bild und der Vielzahl von Bildern in der vorbestimmten Street-View-Datenbank größer als der erste vorbestimmte Schwellenwert ist und die Ähnlichkeit gleich ist und die Zielpositionen der entsprechenden Vielzahl von Bildern unterschiedlich sind, wobei das Aktualisieren der ersten Position auf die zweite Position gemäß dem Vergleichsergebnis ferner umfasst:
dass das Zielfahrzeug das reale Bild in einem anderen Winkel erfasst; Vergleichen des realen Bilds mit dem Bild in der vorbestimmten Street-View-Datenbank, bis die zweite Position bestimmt werden kann,
oder
wobei das Aktualisieren der ersten Position auf die zweite Position gemäß dem Vergleichsergebnis ferner umfasst:
Steuern des Zielfahrzeugs, um sich zu bewegen, und nach dem Bewegen Erfassen des entsprechenden realen Bilds und der ersten Position und dann Vergleichen des realen Bilds mit dem Bild in der vorbestimmten Street-View-Datenbank, bis die zweite Position bestimmt ist.

2. Verfahren nach Anspruch 1, wobei
das Verfahren vor dem Erfassen der Informationen des Zielfahrzeugs ferner umfasst: Erfassen einer Navigationsrouten-Erzeugungsanfrage, wobei die Navigationsrouten-Erzeugungsanfrage konfiguriert ist, um das Erfassen einer Navigationsroute von der aktuellen Position zu dem Zielfahrzeug anzufragen, und die aktuelle Position eine Ausgabeposition der Navigationsrouten-Erzeugungsanfrage ist,
das Verfahren nach dem Aktualisieren der ersten Position auf die zweite Position gemäß dem realen Bild ferner umfasst: Erzeugen der Navigationsroute gemäß der zweiten Position und der aktuellen Position.

3. Verfahren nach Anspruch 1, wobei das Vergleichen des realen Bilds mit dem Bild in der vorbestimmten Straßen-Datenbank umfasst:
Nachschlagen eines Satzes von Bildern in der vorbestimmten Street-View-Datenbank, von denen eine Position kleiner als ein zweiter vorbestimmter Schwellenwert von der ersten Position ist;
Vergleichen jeweils des realen Bilds mit jedem Bild in dem Satz von Bildern.

4. Verfahren nach Anspruch 1, wobei das Verfahren vor dem Erfassen der Informationen des Zielfahrzeugs ferner umfasst:
Erfassen einer Vielzahl von realen Bildern, die von einer Vielzahl von Fahrzeugen innerhalb einer vorbestimmten Zeitdauer aufgenommen wird, und einer Position der Vielzahl von Fahrzeugen, an der die Vielzahl von realen Bildern aufgenommen wird, wobei jedes der Vielzahl von realen Bildern eine Position von einem der Vielzahl der Fahrzeuge abbildet;
Einrichten der vorbestimmten Street-View-Datenbank mit der Vielzahl von realen Bildern und Positionen der Vielzahl von Fahrzeugen, die beide eine Abbildungsbeziehung zueinander aufweisen.

5. Verfahren nach einem der Ansprüche 1 bis 4, wobei das Erfassen der Informationen des Zielfahrzeugs umfasst:
Senden einer Meldeanweisung an das Zielfahrzeug;
Erfassen des realen Bilds, das von dem Zielfahrzeug aufgenommen und gemeldet wird, als Reaktion auf die Meldeanweisung, und Erfassen der ersten Position, die von dem Zielfahrzeug gemeldet wird.

6. Positionsanzeigeverfahren, umfassend:
Senden einer Positionsanzeigeanfrage eines Zielfahrzeugs von einem Endgerät an einen Server;
Anzeigen einer Position des Zielfahrzeugs auf einer Anzeigeschnittstelle des Endgeräts, wobei die Position des Zielfahrzeugs eine zweite Position ist, die durch Aktualisieren einer ersten Position gemäß einem realen Bild erhalten wird, wobei die erste Position eine Position des Zielfahrzeugs ist, die von einer GPS-Komponente des Zielfahrzeugs detektiert wird, und das reale Bild ein Bild ist, das von einer Fotografiervorrichtung des Zielfahrzeugs aufgenommen wurde,
wobei das Aktualisieren der ersten Position auf die zweite Position gemäß dem realen Bild umfasst:
Vergleichen des realen Bilds mit einem Bild in einer vorbestimmten Street-View-Datenbank, um ein Vergleichsergebnis zu erhalten, wobei die vorbestimmte Street-View-Datenbank ein Bild und eine Position aufzeichnet, an der das Bild aufgenommen wird, die beide eine Abbildungsbeziehung zueinander aufweisen;
Aktualisieren der ersten Position auf die zweite Position gemäß dem Vergleichsergebnis,
wobei das Aktualisieren der ersten Position auf die zweite Position gemäß dem Vergleichsergebnis umfasst:
Aktualisieren der ersten Position auf eine Zielposition in der vorbestimmten Street-View-Datenbank, die eine Abbildungsbeziehung zwischen der Zielposition und einem Zielbild aufweist, wobei die zweite Position die Zielposition ist, in einem Fall, in dem eine Ähnlichkeit zwischen dem realen Bild und dem Zielbild in der vorbestimmten Street-View-Datenbank größer als ein erster vorbestimmter Schwellenwert ist, wobei das Zielbild ein Bild in der vorbestimmten Street-View-Datenbank ist und dessen Ähnlichkeit mit dem realen Bild größer als der erste vorbestimmte Schwellenwert ist, in einem Fall, in dem die Ähnlichkeit zwischen dem realen Bild und der Vielzahl von Bildern in der vorbestimmten Street-View-Datenbank größer als der erste vorbestimmte Schwellenwert ist und die Ähnlichkeit gleich ist und die Zielpositionen der entsprechenden Vielzahl von Bildern unterschiedlich sind, wobei das Aktualisieren der ersten Position auf die zweite Position gemäß dem Vergleichsergebnis ferner umfasst:
dass das Zielfahrzeug das reale Bild in einem anderen Winkel erfasst; Vergleichen des realen Bilds mit dem Bild in der vorbestimmten Street-View-Datenbank, bis die zweite Position bestimmt werden kann,
oder
wobei das Aktualisieren der ersten Position auf die zweite Position gemäß dem Vergleichsergebnis ferner umfasst:
Steuern des Zielfahrzeugs, um sich zu bewegen, und nach dem Bewegen Erfassen des entsprechenden realen Bilds und der ersten Position und dann Vergleichen des realen Bilds mit dem Bild in der vorbestimmten Street-View-Datenbank, bis die zweite Position bestimmt ist.

7. Verfahren nach Anspruch 6, wobei das Verfahren nach dem Anzeigen der Position des Zielfahrzeugs auf der Anzeigeschnittstelle des Endgeräts ferner umfasst:
Senden einer Navigationsrouten-Erzeugungsanfrage von dem Endgerät an den Server, wobei die Navigationsrouten-Erzeugungsanfrage konfiguriert ist, um das Erfassen einer Navigationsroute von einer aktuellen Position des Endgeräts zu dem Zielfahrzeug anzufragen;
Erfassen der Navigationsroute von dem Server, wobei die Navigationsroute gemäß der aktuellen Position und der zweiten Position erzeugt wird;
Anzeigen der Navigationsroute auf der Anzeigeschnittstelle des Endgeräts.

8. Verfahren nach Anspruch 7, wobei das Anzeigen der Navigationsroute auf der Anzeigeschnittstelle des Endgeräts umfasst:
Anzeigen virtueller Routeninformationen in einem Echtzeit-Szenenbild, das von einer Kamera des Endgeräts erhalten wird, wobei die virtuellen Routeninformationen konfiguriert sind, um die Navigationsroute anzugeben.

9. Fahrzeug, umfassend:
eine Karosserie;
eine Fotografiervorrichtung, die an der Karosserie angebracht ist, wobei die Fotografiervorrichtung konfiguriert ist, um ein reales Bild um das Fahrzeug herum aufzunehmen;
eine GPS-Komponente, die an der Karosserie angebracht ist, wobei die GPS-Komponente konfiguriert ist, um eine erste Position des Fahrzeugs zu erfassen;
eine Übertragungseinheit, die an der Karosserie angebracht ist, wobei die Übertragungseinheit konfiguriert ist, um Informationen zu empfangen und zu übertragen, wobei die Informationen die erste Position und das reale Bild umfassen;
einen Prozessor, der an der Karosserie angebracht ist, wobei der Prozessor konfiguriert ist, um den Betrieb der GPS-Komponente, der Fotografiervorrichtung und der Übertragungseinheit zu steuern,
wobei die Position eine erste Position ist und das reale Bild konfiguriert ist, um die erste Position auf eine zweite Position zu aktualisieren,
wobei das Aktualisieren der ersten Position auf die zweite Position gemäß dem realen Bild umfasst:
Vergleichen des realen Bilds mit einem Bild in einer vorbestimmten Street-View-Datenbank, um ein Vergleichsergebnis zu erhalten, wobei die vorbestimmte Street-View-Datenbank ein Bild und eine Position aufzeichnet, an der das Bild aufgenommen wird, die beide eine Abbildungsbeziehung zueinander aufweisen;
Aktualisieren der ersten Position auf die zweite Position gemäß dem Vergleichsergebnis,
wobei das Aktualisieren der ersten Position auf die zweite Position gemäß dem Vergleichsergebnis umfasst:
Aktualisieren der ersten Position auf eine Zielposition in der vorbestimmten Street-View-Datenbank, die eine Abbildungsbeziehung zwischen der Zielposition und einem Zielbild aufweist, wobei die zweite Position die Zielposition ist, in einem Fall, in dem eine Ähnlichkeit zwischen dem realen Bild und dem Zielbild in der vorbestimmten Street-View-Datenbank größer als ein erster vorbestimmter Schwellenwert ist, wobei das Zielbild ein Bild in der vorbestimmten Street-View-Datenbank ist und dessen Ähnlichkeit mit dem realen Bild größer als der erste vorbestimmte Schwellenwert ist, in einem Fall, in dem die Ähnlichkeit zwischen dem realen Bild und der Vielzahl von Bildern in der vorbestimmten Street-View-Datenbank größer als der erste vorbestimmte Schwellenwert ist und die Ähnlichkeit gleich ist und die Zielpositionen der entsprechenden Vielzahl von Bildern unterschiedlich sind, wobei das Aktualisieren der ersten Position auf die zweite Position gemäß dem Vergleichsergebnis ferner umfasst:
dass das Zielfahrzeug das reale Bild in einem anderen Winkel erfasst; Vergleichen des realen Bilds mit dem Bild in der vorbestimmten Street-View-Datenbank, bis die zweite Position bestimmt werden kann,
oder
wobei das Aktualisieren der ersten Position auf die zweite Position gemäß dem Vergleichsergebnis ferner umfasst:
Steuern des Zielfahrzeugs, um sich zu bewegen, und nach dem Bewegen Erfassen des entsprechenden realen Bilds und der ersten Position und dann Vergleichen des realen Bilds mit dem Bild in der vorbestimmten Street-View-Datenbank, bis die zweite Position bestimmt ist.

## Revendications

1. Procédé de mise à jour de position, comprenant :
l'acquisition d'informations d'un véhicule cible, les informations du véhicule cible comprenant une première position du véhicule cible détectée par un composant GPS du véhicule cible et une image réelle prise par un dispositif de photographie du véhicule cible et l'image réelle étant une image qui est prise autour du véhicule ;
la mise à jour de la première position sur une seconde position selon l'image réelle, la seconde position est conçue pour représenter une position actuelle du véhicule cible,
la mise à jour de la première position sur la seconde position selon l'image réelle comprenant :
la comparaison de l'image réelle avec une image dans une base de données de vues de rues prédéterminée pour obtenir un résultat de comparaison, la base de données de vues de rues prédéterminée enregistrant une image et une position où l'image est capturée, les deux ayant une relation de mappage entre elles ;
la mise à jour de la première position sur la seconde position selon le résultat de la comparaison,
la mise à jour de la première position sur la seconde position selon le résultat de comparaison comprenant :
la mise à jour de la première position sur une position cible dans la base de données de vues de rues prédéterminée ayant une relation de mappage entre la position cible et une image cible, la seconde position étant la position cible, dans un cas où une similarité entre l'image réelle et l'image cible dans la base de données de vues de rues prédéterminée est supérieure à un premier seuil prédéterminé, l'image cible étant une image dans la base de données de vues de rues prédéterminée et dont la similarité avec l'image réelle est supérieure au premier seuil prédéterminé,
dans un cas où la similarité entre l'image réelle et la pluralité d'images dans la base de données de vues de rues prédéterminée est supérieure au premier seuil prédéterminé et que la similarité est la même et les positions cibles de la pluralité correspondante d'images sont différentes, la mise à jour de la première position sur la seconde position selon le résultat de comparaison comprenant en outre :
l'acquisition, par le véhicule cible, de l'image réelle sous un autre angle ; la comparaison de l'image réelle avec l'image dans la base de données de vues de rues prédéterminée jusqu'à ce que la seconde position puisse être déterminée,
ou,
la mise à jour de la première position sur la seconde position selon le résultat de comparaison comprenant en outre :
la commande du déplacement du véhicule cible et, après le déplacement, l'acquisition de l'image réelle correspondante et de la première position, puis la comparaison de l'image réelle avec l'image dans la base de données de vues de rues prédéterminée jusqu'à ce que la seconde position soit déterminée.

2. Procédé selon la revendication 1, dans lequel
avant l'acquisition des informations du véhicule cible, le procédé comprend en outre : l'acquisition d'une requête de génération d'itinéraire de navigation, la requête de génération d'itinéraire de navigation étant configurée pour requérir l'acquisition d'un itinéraire de navigation, de la position actuelle au véhicule cible, et la position actuelle étant une position d'émission de la requête de génération d'itinéraire de navigation,
après la mise à jour de la première position sur la seconde position selon l'image réelle, le procédé comprend en outre : la génération de l'itinéraire de navigation selon la seconde position et la position actuelle.

3. Procédé selon la revendication 1, dans lequel la comparaison de l'image réelle avec l'image dans la base de données de rues prédéterminée comprend :
la recherche d'un ensemble d'images dans la base de données de vues de rues prédéterminée, dont une position est inférieure à un second seuil prédéterminé à partir de la première position ;
la comparaison de l'image réelle avec respectivement chaque image dans l'ensemble d'images.

4. Procédé selon la revendication 1, dans lequel, avant l'acquisition des informations du véhicule cible, le procédé comprend en outre :
l'acquisition d'une pluralité d'images réelles capturées par une pluralité de véhicules dans une période prédéterminée et d'une position de la pluralité de véhicules, la pluralité d'images réelles étant capturées, chaque image réelle de la pluralité des images réelles étant mappée avec une position d'un véhicule parmi la pluralité des véhicules ;
l'établissement de la base de données de vues de rues prédéterminée avec la pluralité d'images réelles et les positions de la pluralité de véhicules, les deux ayant une relation de mappage entre elles.

5. Procédé selon l'une quelconque des revendications 1 à 4, dans lequel l'acquisition des informations du véhicule cible comprend :
l'envoi d'une instruction de rapport au véhicule cible ;
l'acquisition de l'image réelle prise et rapportée par le véhicule cible en réponse à l'instruction de rapport et l'acquisition de la première position rapportée par le véhicule cible.

6. Procédé d'affichage de position, comprenant :
l'envoi d'une requête d'affichage de position d'un véhicule cible, d'un terminal à un serveur ;
l'affichage d'une position du véhicule cible sur une interface d'affichage du terminal, la position du véhicule cible étant une seconde position obtenue par mise à jour d'une première position selon une image réelle, la première position étant une position du véhicule cible détectée par le composant GPS du véhicule cible et l'image réelle étant une image prise par un dispositif de photographie du véhicule cible,
la mise à jour de la première position sur la seconde position selon l'image réelle comprenant :
la comparaison de l'image réelle avec une image dans une base de données de vues de rues prédéterminée pour obtenir un résultat de comparaison, la base de données de vues de rues prédéterminée enregistrant une image et une position où l'image est capturée, les deux ayant une relation de mappage entre elles ;
la mise à jour de la première position sur la seconde position selon le résultat de la comparaison,
la mise à jour de la première position sur la seconde position selon le résultat de comparaison comprenant :
la mise à jour de la première position sur une position cible dans la base de données de vues de rues prédéterminée ayant une relation de mappage entre la position cible et une image cible, la seconde position étant la position cible, dans un cas où une similarité entre l'image réelle et l'image cible dans la base de données de vues de rues prédéterminée est supérieure à un premier seuil prédéterminé, l'image cible étant une image dans la base de données de vues de rues prédéterminée et dont la similarité avec l'image réelle est supérieure au premier seuil prédéterminé, dans un cas où la similarité entre l'image réelle et la pluralité d'images dans la base de données de vues de rues prédéterminée est supérieure au premier seuil prédéterminé et que la similarité est la même et les positions cibles de la pluralité d'images correspondante sont différentes, la mise à jour de la première position sur la seconde position selon le résultat de la comparaison comprenant en outre :
l'acquisition, par le véhicule cible, de l'image réelle sous un autre angle ; la comparaison de l'image réelle avec l'image dans la base de données de vues de rues prédéterminée jusqu'à ce que la seconde position puisse être déterminée,
ou,
la mise à jour de la première position sur la seconde position selon le résultat de comparaison comprenant en outre :
la commande du déplacement du véhicule cible et, après le déplacement, l'acquisition de l'image réelle correspondante et de la première position, puis la comparaison de l'image réelle avec l'image dans la base de données de vues de rues prédéterminée jusqu'à ce que la seconde position soit déterminée.

7. Procédé selon la revendication 6, dans lequel, après l'affichage de la position du véhicule cible sur l'interface d'affichage du terminal, le procédé comprend en outre :
l'envoi d'une requête de génération d'itinéraire de navigation, du terminal au serveur, la requête de génération d'itinéraire de navigation étant configurée pour requérir l'acquisition d'un itinéraire de navigation, d'une position actuelle du terminal jusqu'au véhicule cible ;
l'acquisition de l'itinéraire de navigation à partir du serveur, l'itinéraire de navigation étant généré selon la position actuelle et la seconde position ;
l'affichage de l'itinéraire de navigation sur l'interface d'affichage du terminal.

8. Procédé selon la revendication 7, dans lequel l'affichage de l'itinéraire de navigation sur l'interface d'affichage du terminal comprend :
l'affichage d'informations d'itinéraire virtuel dans une image de scène en temps réel obtenue par une caméra du terminal, les informations d'itinéraire virtuel étant configurées pour indiquer l'itinéraire de navigation.

9. Véhicule comprenant :
une carrosserie ;
un dispositif de photographie, monté sur la carrosserie, le dispositif de photographie étant configuré pour prendre une image réelle autour du véhicule ;
un composant GPS, monté sur la carrosserie, le composant GPS étant configuré pour acquérir une première position du véhicule ;
une unité de transmission, montée sur la carrosserie, l'unité de transmission étant configurée pour recevoir et transmettre des informations, les informations comprenant la première position et l'image réelle ;
un processeur, monté sur la carrosserie, le processeur étant configuré pour commander le fonctionnement du composant GPS, du dispositif de photographie et de l'unité de transmission,
la position étant une première position et l'image réelle étant configurée pour mettre à jour la première position sur une seconde position,
la mise à jour de la première position sur la seconde position selon l'image réelle comprenant :
la comparaison de l'image réelle avec une image dans une base de données de vues de rues prédéterminée pour obtenir un résultat de comparaison, la base de données de vues de rues prédéterminée enregistrant une image et une position où l'image est capturée, les deux ayant une relation de mappage entre elles ;
la mise à jour de la première position sur la seconde position selon le résultat de la comparaison,
la mise à jour de la première position sur la seconde position selon le résultat de comparaison comprenant :
la mise à jour de la première position sur une position cible dans la base de données de vues de rues prédéterminée ayant une relation de mappage entre la position cible et une image cible, la seconde position étant la position cible, dans un cas où une similarité entre l'image réelle et l'image cible dans la base de données de vues de rues prédéterminée est supérieure à un premier seuil prédéterminé, l'image cible étant une image dans la base de données de vues de rues prédéterminée et dont la similarité avec l'image réelle est supérieure au premier seuil prédéterminé, dans un cas où la similarité entre l'image réelle et la pluralité d'images dans la base de données de vues de rues prédéterminée est supérieure au premier seuil prédéterminé et que la similarité est la même et les positions cibles de la pluralité d'images correspondante sont différentes, la mise à jour de la première position sur la seconde position selon le résultat de la comparaison comprenant en outre :
l'acquisition, par le véhicule cible, de l'image réelle sous un autre angle ; la comparaison de l'image réelle avec l'image dans la base de données de vues de rues prédéterminée jusqu'à ce que la seconde position puisse être déterminée,
ou,
la mise à jour de la première position sur la seconde position selon le résultat de comparaison comprenant en outre :
la commande du déplacement du véhicule cible et, après le déplacement, l'acquisition de l'image réelle correspondante et de la première position, puis la comparaison de l'image réelle avec l'image dans la base de données de vues de rues prédéterminée jusqu'à ce que la seconde position soit déterminée.
